# NOUVEAU FASCICULE DE BREVET EUROPEEN

(11) **EP 1 046 557 B2**
(45) Date de publication et mention de la décision concernant l'opposition: **26.08.2009**
(45) Mention de la délivrance du brevet: 25.05.2005
(21) Numéro de dépôt: 00401085.6
(22) Date de dépôt: 19.04.2000
(51) Int. Cl.: B60R 25/00, B60R 25/04, E05B 49/00

(54) **Système d'autorisation de démarrage pour un véhicule automobile**
Zugangsberechtigungssystem für ein Fahrzeug
Access authorization system for a vehicle

(30) Priorité: 20.04.1999 FR 9904953
(43) Date de publication de la demande: 25.10.2000
(73) Titulaire: VALEO SECURITE HABITACLE S.A.S., 94042 Créteil Cédex (FR)
(72) Inventeur: Baudard, Xavier, 75016 Paris (FR); Pedemas, Didier, 94440 Marolles en Brie (FR); Barbier, Stéphane, 91640 Briis sous Forges (FR); Boulesteix, Xavier, 94100 Saint Maur des Fosses (FR)
(74) Mandataire: Jacquot, Ludovic R. G.

(56) Documents cités:
- EP-A- 0 536 430
- EP-A1- 0 794 095
- EP-A2- 0 893 315
- WO-A-95/09747
- WO-A-97/04201
- WO-A1-95/09748
- DE-A- 3 921 893
- DE-A- 4 308 372
- DE-A1- 4 329 697
- DE-A1- 19 542 441
- FR-A1- 2 709 512
- FR-A1- 2 741 199

## Description

La présente invention concerne un système d'autorisation de démarrage pour un véhicule automobile, du type "mains libres".

Un système selon le préambule de la revendication 1 est connu généralement dans l'état de la technique.

Dans un tel système, un moyen d'identification est installé sur le véhicule automobile et relié à une unité centrale de commande pour commander un moyen d'anti-démarrage du véhicule, et un identifiant est destiné à être porté par un utilisateur et apte à échanger à distance des données avec le moyen d'identification, pour permettre une autorisation de démarrage lorsque l'identifiant a été authentifié par le moyen d'identification. Le moyen d'anti-démarrage du véhicule comprend, par exemple un moyen de blocage du mécanisme de direction, ou un moyen d'inhibition du dispositif d'allumage et/ou d'injection de carburant du moteur du véhicule automobile.

Généralement, un tel système d'autorisation de démarrage est également utilisé pour autoriser l'accès au véhicule, en commandant les moyens de verrouillage des ouvrants du véhicule.

Toutefois, lorsque le niveau de charge de la batterie de l'identifiant est insuffisant pour permettre une authentification par le moyen d'identification embarqué sur le véhicule, il est nécessaire de prévoir un moyen de secours pour permettre de démarrer le véhicule.

On connait du document WO 9704201 un système d'autorisation de démarrage dans lequel une authentification est réalisée suite à l'insertion dans le démarreur d'une clé munie d'un transpondeur sans batterie d'alimentation propre, l'échange de donnée s'effectuant grâce à un transfert d'énergie par couplage électromagnétique.

FR 2 709 512 A1 divulgue un système de contrôle d'accès à un véhicule qui établit, même dans le cas de perturbations de la voie de transmission ou dans le cas d'une alimentation insuffisante en tension, un dialogue interrogation-réponse entre un transpondeur et une unité d'émission et de réception, pour le verrouillage ou le déverrouillage d'une unité de déverrouillage. Un signal de code d'interrogation peut être transmis de façon inductive du véhicule au transpondeur. Le système de contrôle d'accès peut agir également en tant que dispositif empêchant le démarrage.

La présente invention a donc pour but de proposer un système d'autorisation de démarrage pour un véhicule automobile, qui comporte un moyen de secours dans le cas où le niveau de charge de la batterie de l'identifiant est insuffisant pour permettre une authentification par le moyen d'identification embarqué sur le véhicule.

A cet effet, l'invention a pour objet un système d'autorisation de démarrage pour un véhicule automobile, tel que défini dans la revendication 1.

Dans un mode de réalisation particulier, le module de secours précité comporte un générateur basse fréquence relié, d'une part, à l'unité centrale de commande et, d'autre part, à un module analogique connecté à une antenne de secours à l'intérieur de l'habitacle du véhicule. Dans ce cas, on peut prévoir que ladite antenne de secours est située à proximité d'un emplacement spécifique dans l'habitacle, ledit emplacement étant destiné à recevoir l'identifiant pour permettre le fonctionnement du module de secours.

Avantageusement, ledit emplacement est muni d'un moyen de retenue de l'identifiant, pour permettre le fonctionnement du module de secours, lorsque le véhicule est en marche, par exemple.

Typiquement, le module de secours est activé en l'absence de réponse au bout d'une durée prédéterminée.

Selon une autre caractéristique, le générateur du module de secours est apte à moduler par déplacement d'amplitudes, le module analogique pour réveiller l'identifiant.

Selon encore une autre caractéristique, le générateur du module de secours est apte à moduler par déplacement de fréquences, le module analogique pour télé-alimenter et communiquer avec l'identifiant.

De préférence, le moyen d' anti-démarrage du véhicule précité comprend un moyen de blocage du mécanisme de direction et/ou un moyen d'inhibition du dispositif d'allumage et/ou d'injection de carburant du moteur du véhicule.

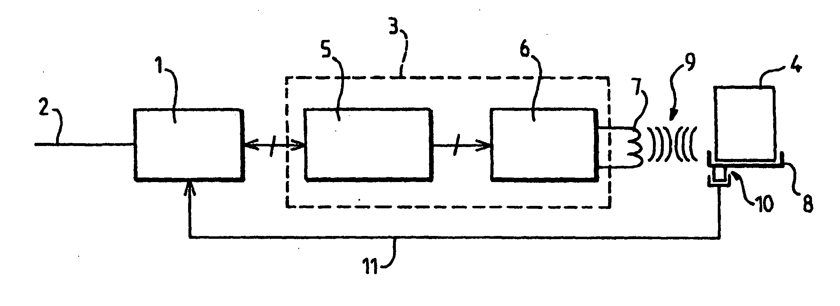

Pour mieux faire comprendre l'objet de l'invention, on va en décrire maintenant, à titre d'exemple purement illustratif et non limitatif, un mode de réalisation représenté sur le dessin annexé. Ce dessin comprend une figure unique représentant un schéma synoptique fonctionnel du système selon l'invention.

Sur cette figure, l'unité centrale de commande 1 est destinée à être reliée, par un bus d'alimentation 2 à plusieurs organes du véhicule, par exemple des moyens de verrouillage des ouvrants, un moyen d'anti-démarrage du véhicule, un moyen d'identification, etc ... L'unité centrale 1 est reliée, en outre, à un module électronique de communication de secours 3 qui est destiné à être activé uniquement lorsque le niveau de charge de la batterie d'un identifiant 4, destiné à être porté par un utilisateur, est insuffisant pour permettre son authentification par le moyen d'identification précité.

Le module de secours 3 comporte un générateur basse fréquence 5 relié, d'une part, à l'unité centrale 1 et, d'autre part, à un module analogique 6. Le module analogique 6 est relié aux bornes d'une bobine 7 qui constitue l'antenne de secours du système de l'invention.

L'antenne de secours 7 est située à proximité d'un emplacement 8 dans l'habitacle du véhicule, pour permettre une transmission de données bidirectionnelle, comme représentée en 9, entre l'antenne 7 et un identifiant 4 positionné dans l'emplacement 8.

Dans un mode de réalisation avantageux, l'emplacement 8 est équipé d'un contacteur 10 qui est relié à l'unité centrale 1 par une liaison 11, pour activer le module de secours 3, lorsqu'un identifiant 4 est positionné dans l'emplacement 8.

Bien que cela ne soit pas représenté, le moyen d'identification est relié à une antenne intérieure dans l'habitacle du véhicule, ladite antenne intérieure étant plus grande que l'antenne de secours 7 du moyen de secours, pour avoir une zone de couverture s'étendant dans tout l'habitacle du véhicule, contrairement à l'antenne de secours qui doit simplement communiquer avec l'identifiant positionné dans un emplacement situé à proximité de l'antenne 7.

Le moyen d'identification sur le véhicule est destiné, en mode normal, à interroger l'identifiant en basse fréquence et à recevoir un signal en réponse en radio-fréquence, en provenance de l'identifiant.

Le module de secours 3 est destiné à réveiller l'identifiant 4, à le télé-alimenter et à communiquer avec lui, pour permettre une authentification de l'identifiant, via l'unité centrale 1.

L'identifiant comporte, d'une manière classique, une batterie d'alimentation, par exemple une pile, et un circuit électronique de dialogue pour recevoir et émettre des signaux avec le moyen d'identification sur le véhicule.

Bien que l'invention ait été décrite en liaison avec plusieurs exemples de réalisation particuliers, il est bien évident qu'elle n'y est nullement limitée et qu'elle comprend tous les équivalents techniques des moyens décrits ainsi que leurs combinaisons si celles-ci entrent dans le cadre de l'invention.

En particulier, le module de secours 3 est apte à moduler également par déplacement de phase le module analogique 6.

Par ailleurs, l'activation du fonctionnement du module de secours 3 peut être également déclenchée lorsque l'unité centrale de commande 1 détecte la fermeture d'une porte avant, voire de toutes les portes.

## Revendications

1. Système d'autorisation de démarrage pour un véhicule automobile, comportant un moyen d'identification installé sur le véhicule et relié à une unité centrale de commande (1) pour commander un moyen d'anti-démarrage du véhicule, et un identifiant (4) destiné à être porté par un utilisateur, ledit identifiant comportant une batterie d'alimentation et étant apte, dans un mode de fonctionnement normal, à échanger à distance des données avec le moyen d'identification en utilisant l'énergie fournie par la batterie d'alimentation, pour permettre une autorisation de démarrage lorsque l'identifiant a été authentifié par le moyen d'identification, l'unité centrale de commande étant reliée à un module électronique de communication de secours (3), destiné à être activé lorsque, d'une part, le niveau de charge de la batterie de l'identifiant est insuffisant pour permettre une authentification par le moyen d'identification, et, d'autre part, l'identifiant est à l'intérieur de l'habitacle du véhicule, ledit module étant apte à télé-alimenter l'identifiant et à établir avec lui une transmission bidirectionnelle de données (9) en basse fréquence, pour permettre une autorisation de démarrage lorsque l'identifiant a été authentifié par l'intermédiaire dudit module, et le système étant tel que après détection par l'unité centrale de commande (1) de l'ouverture d'une portière avant du véhicule, le moyen d'identification étant apte à déclencher une séquence d'interrogations par une antenne intérieure dans l'habitacle du véhicule, et en l'absence de réception par le moyen d'identification d'un signal en réponse de l'identifiant (4), l'unité centrale de commande étant apte à activer le fonctionnement du module de secours (3).

2. Système selon la revendication 1, **caractérisé par le fait que** le module de secours précité (3) comporte un générateur basse fréquence (5) relié, d'une part, à l'unité centrale de commande (1) et, d'autre part, à un module analogique (6) connecté à une antenne de secours (7) à l'intérieur de l'habitacle du véhicule.

3. Système selon la revendication 2, **caractérisé par le fait que** ladite antenne de secours (7) est située à proximité d'un emplacement spécifique (8) dans l'habitacle, ledit emplacement étant destiné à recevoir l'identifiant (4) pour permettre le fonctionnement du module de secours (3).

4. Système selon la revendication 3, **caractérisé par le fait que** ledit emplacement (8) est muni d'un moyen de retenue de l'identifiant (4).

5. Système selon l'une des revendications 1 à 4, **caractérisé par le fait que** le module de secours (3) est activé en l'absence de réponse au bout d'une durée prédéterminée.

6. Système selon l'une des revendications 2 à 5, **caractérisé par le fait que** le générateur (5) du module de secours (3) est apte à moduler par déplacement d'amplitudes, le module analogique (6) pour réveiller l'identifiant (4).

7. Système selon l'une des revendications 2 à 6, **caractérisé par le fait que** le générateur (5) du module de secours (3) est apte à moduler par déplacement de fréquences, le module analogique (6) pour télé-alimenter et communiquer avec l'identifiant (4).

8. Système selon l'une des revendications 1 à 7, **caractérisé par le fait que** le moyen d'anti-démarrage du véhicule précité comprend un moyen de blocage du mécanisme de direction et/ou un moyen d'inhibition du dispositif d'allumage et/ou d'injection de carburant du moteur du véhicule.

## Claims

1. Starting enabling system for a motor vehicle, comprising an identification means installed on the vehicle and connected to a central control unit (1) in order to control an anti-starting means of the vehicle and an identifier (4) intended to be carried by a user, the said identifier comprising a supply battery and being able, in a normal operating mode, to exchange data remotely with the identification means using the energy supplied by the supply battery, to allow enabling of starting when the identifier has been authenticated by the identification means, the central control unit being connected to a back-up electronic communication module (3) intended to be activated when on the one hand the battery charge level of the identifier is insufficient to allow authentication by the identification means and on the other hand the identifier is inside the vehicle cabin, the said module being able to supply the identifier remotely and establish bi-directional data transmission (9) with it in low frequency, to allow starting enabling wen the identifier has been authenticated by means of the said module, and the system being such that, after detection by the central control unit (1) of the opening of a front door of the vehicle, the identification means being able to trigger a sequence of interrogations by an internal antenna in the vehicle cabin and, in the absence of reception by the identification means of a signal in response from the identifier (4), the central control unit being able to activate the functioning of the back-up module (3).

2. System according to Claim 1, **characterised by** the fact that the aforementioned back-up module (3) comprises a low-frequency generator (5) connected on the one hand to the central control unit (1) and on the other hand to an analogue module (6) connected to a back-up antenna (7) inside the vehicle cabin.

3. System according to Claim 2, **characterised by** the fact that the said back-up antenna (7) is situated close to a specific location (8) in the cabin, the said location being intended to receive the identifier (4) to allow the functioning of the back-up module (3).

4. System according to Claim 3, **characterised by** the fact that the said location (8) is provided with a means of holding the identifier (4).

5. System according to one of Claims 1 to 4, **characterised by** the fact that the back-up module (3) is activated in the absence of a response at the end of a pre-determined period.

6. System according to one of Claims 2 to 5, **characterised by** the fact that the generator (5) of the back-up module (3) is able to modulate the analogue module (6) by amplitude shifting in order to wake up the identifier (4).

7. System according to one of Claims 2 to 6, **characterised by** the fact that the generator (5) of the back-up module (3) is able to modulate the analogue module (6) by frequency shifting in order to remotely supply and communicate with the identifier (4).

8. System according to one of Claims 1 to 7, **characterised by** the fact that the anti-starting means of the aforementioned vehicle comprises a means of locking the steering mechanism and/or a means of inhibiting the ignition and/or fuel injection device of the vehicle engine.

## Patentansprüche

1. Startberechtigungssystem für ein Kraftfahrzeug, mit einem Identifikationsmittel, das am Fahrzeug installiert und mit einer Steuerzentraleinheit (1) verbunden ist, um ein Startverhinderungsmittel des Fahrzeugs zu steuern, und mit einem Identifizierer (4), der dazu bestimmt ist, von einem Benutzer mitgeführt zu werden, wobei der genannte Identifizierer eine Versorgungsbatterie enthält und bei normalem Betriebsmodus mit dem Identifikationsmittel Daten über eine Entfernung austauschen kann, indem er die von der Versorgungsbatterie gelieferte Energie verwendet, um eine Startberechtigung dann zu ermöglichen, wenn der Identifizierer über das Identifikationsmittel authentifiziert wurde, wobei die Steuerzentraleinheit mit einem elektronischen Notkommunikationsmodul (3) verbunden ist, das dazu bestimmt ist, aktiviert zu werden, wenn einerseits der Ladestand der Batterie des Identifizierers nicht ausreichend ist, um eine Authentifizierung über das Identifikationsmittel zu gestatten, und wenn andererseits der Identifizierer sich im Inneren des Fahrgastraums des Fahrzeugs befindet, wobei das genannte Modul den Identifizierer fernspeisen kann und mit diesem eine bidirektionale Datenübertragung (9) in Niederfrequenz aufbauen kann, um eine Startberechtigung zu ermöglichen, wenn der Identifizierer über das genannte Modul authentifiziert wurde, und wobei das System derart ist, dass nach Erfassung des Öffnens einer Vordertür des Fahrzeugs durch die Steuerzentraleinheit (1) das Identifikationsmittel eine Folge von Abfragungen über eine Innenantenne im Fahrgastraum des Fahrzeugs auslösen kann und bei fehlendem Empfang eines vom Identifizierer (4) stammenden Antwortsignals durch das Identifikationsmittel die Steuerzentraleinheit den Betrieb des Notmoduls (3) aktivieren kann.

2. System nach Anspruch 1, **dadurch gekennzeichnet, dass** das vorgenannte Notmodul (3) einen Niederfrequenzgenerator (5) enthält, der einerseits mit der Steuerzentraleinheit (1) und andererseits mit einem Analogmodul (6) verbunden ist, das an eine Notantenne (7) im Inneren des Fahrgastraums des Fahrzeugs angeschlossen ist.

3. System nach Anspruch 2, **dadurch gekennzeichnet, dass** die genannte Notantenne (7) sich in der Nähe einer spezifischen Stelle (8) im Fahrgastraum befindet, wobei die genannte Stelle dazu bestimmt ist, den Identifizierer (4) aufzunehmen, um den Betrieb des Notmoduls (3) zu gestatten.

4. System nach Anspruch 3, **dadurch gekennzeichnet, dass** die genannte Stelle (8) mit einem Mittel zum Halten des Identifizierers (4) ausgestattet ist.

5. System nach einem der Ansprüche 1 bis 4, **dadurch gekennzeichnet, dass** das Notmodul (3) bei fehlender Antwort nach einer vorbestimmten Dauer aktiviert wird.

6. System nach einem der Ansprüche 2 bis 5, **dadurch gekennzeichnet, dass** der Generator (5) des Notmoduls (3) das Analogmodul (6) durch Amplitudenverschiebung modulieren kann, um den Identifizierer (4) zu wecken.

7. System nach einem der Ansprüche 2 bis 6, **dadurch gekennzeichnet, dass** der Generator (5) des Notmoduls (3) das Analogmodul (6) durch Frequenzverschiebung modulieren kann, um den Identifizierer (4) fernzuspeisen und mit diesem zu kommunizieren.

8. System nach einem der Ansprüche 1 bis 7, **dadurch gekennzeichnet, dass** das genannte Fahrzeugstartverhinderungsmittel ein Mittel zum Blockieren des Lenkmechanismus und/oder ein Mittel zum Unterbinden der Zündvorrichtung und/oder der Einspritzung von Kraftstoff des Fahrzeugmotors enthält.
